# EUROPÄISCHE PATENTSCHRIFT

(11) **EP 1 977 020 B1**
(45) Veröffentlichungstag und Bekanntmachung des Hinweises auf die Patenterteilung: **25.12.2013**
(21) Anmeldenummer: 07704071.5
(22) Anmeldetag: 23.01.2007
(51) Int. Cl.: C21D 9/40, C21D 1/10

(54) **VERFAHREN ZUM HÄRTEN EINES EINEN GESCHLOSSENEN KURVENZUG BESCHREIBENDEN WERKSTÜCKS**
PROCESS FOR HARDENING A WORKPIECE WHICH DESCRIBES A CLOSED CURVE
PROCEDE DE DURCISSEMENT D'UNE PIECE QUI DECRIT UNE COURBE FERMEE

(30) Priorität: 23.01.2006 DE 102006003014
(43) Veröffentlichungstag der Anmeldung: 08.10.2008
(73) Patentinhaber: SMS Elotherm GmbH, 42897 Remscheid (DE)
(72) Erfinder: GEZARZICK, Waldemar, 42857 Remscheid (DE); SEITZER, Andreas, 42929 Wermelskirchen (DE); JÜRGENS, Robert, 42855 Remscheid (DE)
(74) Vertreter: Cohausz & Florack
(86) Internationale Anmeldenummer: PCT/EP2007/050636
(87) Internationale Veröffentlichungsnummer: WO 2007/082957

(56) Entgegenhaltungen:
- WO-A-2006/087152
- GB-A- 735 378
- JP-A- 2005 146 316
- US-A- 2 410 134
- US-A- 3 036 824

## Beschreibung

Die Erfindung betrifft ein Verfahren zum Härten eines einen geschlossenen Kurvenzug beschreibenden Werkstücks. Beispiele für derartige Werkstücke sind im Bereich von Kranantrieben oder Energiegewinnungsanlagen eingesetzte Zahnräder oder Lagerschalen von jeweils großem Durchmesser.

Beim Härten von derart großen ringförmigen oder in vergleichbarer Weise einen eine große Innenöffnung umschließenden Kurvenzug bildenden Werkstücken besteht in der Praxis das Problem, dass derartige Werkstücke im Ganzen nur unter erheblichem apparativen Aufwand und unter großem Zeitbedarf auf Härtetemperatur erwärmt werden können. So sind große Öfen mit entsprechend großen zu beheizenden Volumina und damit einhergehend langen Heizzeiten sowie hohen Energiekosten erforderlich, um das jeweilige Werkstück gleichmäßig auf die erforderliche Härtetemperatur zu erwärmen. Sowohl der apparative Aufwand als auch die Länge der Prozesszeiten führen dazu, dass das Härten von Werkstücken der in Rede stehenden Art auf konventionelle Weise nur mit erheblichem Kostenaufwand durchgeführt werden kann. Hinzu kommt, dass sich im Zuge der Erwärmung im Ofen eine erhebliche Verformung des Werkstücks einstellen kann, die ein aufwändiges nachträgliches Richten des gehärteten Werkstücks erforderlich macht.

Um den mit dem Härten von Werkstücken der in Rede stehenden Art verbundenen Aufwand zu vermindern, sind Härtungseinrichtungen eingesetzt worden, bei denen zum Erwärmen des Werkstücks auf Härtetemperatur induktiv arbeitende Erwärmungseinrichtungen eingesetzt werden. Die ein elektro-magnetisches Feld in das Werkstück induzierenden und auf diese Weise den jeweils in ihrem Wirkbereich befindlichen Abschnitt des Werkstücks auf Härtetemperatur erwärmenden Induktoren der Erwärmungseinrichtung werden dabei entlang des Werkstücks bewegt und die jeweils erwärmten Abschnitte unmittelbar anschließend abgeschreckt, so dass das Werkstück sukzessive über seinen gesamten Umfang gehärtet wird.

Dem Vorteil eines erheblich verminderten apparativen und kostenmäßigen Aufwands solcher Härtungsanlagen steht neben der für die Härtung mit nur einem Induktor erforderlichen Bearbeitungszeit in der Praxis allerdings das Problem entgegen, dass es auch bei Einsatz nur eines einzigen Induktors zu deutlichen Verformungen des Werkstücks in Folge seines jeweils nur abschnittsweise erfolgenden Erwärmens kommt.

Es ist versucht worden, diese Nachteile der induktiv erwärmenden Härtungseinrichtungen durch den Einsatz von zwei Induktoren zu beseitigen, die in parallelen, gegenläufigen Bewegungen entlang des Werkstücks bewegt werden. Auf diese Weise konnten nicht nur die Bearbeitungszeiten halbiert, sondern auch die in Folge des Härtens eintretenden Verformungen des Werkstücks minimiert werden. Allerdings bringt der Einsatz von zwei oder mehr Induktoren zum abschnittsweisen Erwärmen das Problem mit sich, dass die Induktoren aufgrund des von ihnen eingenommenen Bauraums jeweils nur bis zu einem bestimmten Abstand aneinander angenähert werden können.

Auf diese Weise verbleibt selbst dann, wenn die Induktoren zu Beginn oder am Ende des Bearbeitungsvorgangs engst benachbart angeordnet werden, am Werkstück eine Zone, in denen nur eine unzureichende Härte erreicht wird, weil keiner der Induktoren dort unmittelbar wirkt oder es aufgrund von gegenseitigen Störungen der Induktoren nur zu einer unzureichenden Erwärmung dieser Zone kommt. Die derart gehärteten Werkstücke weisen im praktischen Einsatz aufgrund der dann jeweils wirksamen hohen lokalen Belastungen selbst dann im Bereich dieser Zone einen erhöhten Verschleiß auf, wenn ihre Erstreckung auf ein Minimum reduziert ist.

Ein vergleichbares Problem hat beim Härten von Lagerringen mit einer Vorrichtung bestanden, wie sie in der US 3,036,824 vorgeschlagen worden ist. Diese bekannte Vorrichtung umfasst zwei Gasbrenner, die ausgehend von einer Ausgangsstellung gegenläufig zueinander entlang des zu härtenden Lagerrings bewegt werden, bis sie eine Endposition erreicht haben, in der sie nicht weiter gegeneinander bewegt werden können. In dieser Endposition schließen auch die Gasbrenner zwischen sich eine Endzone ein, die nicht unmittelbar durch die von den Brennern abgegebene Wärme erfasst werden kann. Um dennoch diese Endzone auf Härtetemperatur zu bringen, wird in der US 3,036,824 vorgeschlagen, die Gasbrenner so lange auf die an die Endzone angrenzenden Abschnitte des Lagerrings zu halten, bis auch in der Endzone in Folge von Wärmewanderung die erforderliche Härtetemperatur erreicht ist.

Mit der in der US 3,036,824 vorgeschlagenen Vorgehensweise lässt sich zwar ein Lagerring erzeugen, der durchgehend gehärtet ist. Problematisch ist dabei allerdings, dass gerade in die an die Endzone angrenzenden Abschnitte des Werkstücks lokal erhebliche Wärmemengen eingebracht werden müssen, um auch im Bereich der Endzone den für das Erreichen der Härtetemperatur erforderlichen Wärmeeintrag zu sichern. Dies bringt die Gefahr einer Überhitzung des Werkstücks und der Entstehung von Spannungen mit sich, die nicht nur zu Rissbildungen, sondern auch zu einer unzulässigen Verformung des Werkstücks führen können. Darüber hinaus haben praktische Erprobungen ergeben, dass die bekannte, für die Erwärmung mittels Gasbrenner vorgesehene Vorgehensweise sich nicht ohne weiteres auf solche Verfahren übertragen lässt, bei denen die Erwärmung des zu härtenden Werkstücks mittels induktiver Energiezufuhr erfolgt.

Ausgehend von dem voranstehend erläuterten Stand der Technik bestand die Aufgabe der Erfindung darin, ein Verfahren zum Härten von Werkstücken der in Rede stehenden Art zu schaffen, mit denen auf kostengünstige und zeitsparende Weise auch an einen geschlossenen Kurvenzug mit großer Innenöffnung bildenden Werkstücken eine unterbrechungsfrei durchgehende Härtezone erzeugt werden kann.

Diese Aufgabe ist in Bezug auf das Verfahren erfindungsgemäß durch die Lehre des Anspruchs 1 gelöst worden. In den auf Anspruch 1 rückbezogenen Ansprüchen sind vorteilhafte Ausgestaltungen dieser Lehre angegeben.

Gemäß der Erfindung wird das Werkstück mittels induktiver Erwärmung abschnittsweise auf Härtetemperatur gebracht und die derart erwärmten Werkstückabschnitte anschließend in an sich bekannter Weise abgeschreckt. Für das induktive Erwärmen werden mindestens zwei Induktoren verwendet, die zu Beginn der Bearbeitung gemeinsam an eng benachbarten Startpositionen an das Werkstück angesetzt werden. Abhängig von dem von den Induktoren eingenommenen Raum sind deren Startpositionen mehr oder weniger weit voneinander beabstandet, so dass der zwischen den Startpositionen eingeschlossene, die Startzone der Induktiven Erwärmung bildende Abschnitt des Werkstücks mehr oder weniger lang ist.

Erfindungsgemäß wird diese Startzone entweder durch direkte Einwirkung des elektromagnetischen Feldes mindestens eines der Induktoren oder, falls dies aufgrund der Länge der Startzone nicht möglich ist, durch Wärmewanderung auf Härtetemperatur erwärmt, die mindestens von dem im unmittelbaren Wirkbereich eines der Induktoren liegenden Werkstückabschnitt ausgeht. Ebenso kann die Erwärmung der Startzone durch Überlagerung der Wärmeeinflusszonen beider die Startzone begrenzender Induktoren erfolgen. Die Ausnutzung der Wärmewanderung oder der Überlagerung der Wärmeeinflusszonen ist in diesem Fall unkritisch, weil es zu diesem Zeitpunkt der Bearbeitung noch nicht zum Wiederanlassen von bereits gehärteten Abschnitten des Werkstücks in Folge von Wärmewanderung kommen kann.

Anschließend werden die Induktoren ausgehend von ihren Startpositionen in entgegengesetzten Bewegungsrichtungen entlang des Werkstücks bewegt und die zuvor erwärmte Startzone in an sich bekannter Weise durch Ausbringen eines Abschreckmediums abgeschreckt.

Die von der jeweiligen Startzone ausgehende Bewegung der Induktoren erfolgt so, dass die jeweils in ihrem Wirkbereich liegenden Abschnitte des Zahnrades durch das induzierte elektro-magnetische Feld schnell auf Härtetemperatur erwärmt werden. Beispielsweise dann, wenn aufgrund des Werkstückvolumens große Wärmeenergiemengen eingebracht werden müssen, können die Induktoren dazu schrittweise von Abschnitt zu Abschnitt bewegt werden, so dass die Induktoren über die für die Erwärmung des jeweiligen Abschnitts benötigten Erwärmungszeit an dem betreffenden Abschnitt verweilen. Um ein Wiederanlassen angrenzender Bereiche zu verhindern, kann es dabei erforderlich sein, den jeweils angrenzenden, bereits gehärteten Bereich durch eine geeignete Kühlung gegen eine Wiedererwärmung zu schützen.

Im Hinblick auf ein gleichmäßiges Bearbeitungsergebnis bei gleichzeitig minimiertem verfahrenstechnischen und apparativen Aufwand besonders vorteilhaft ist es allerdings, die Bewegung der Induktoren und die anschließende Abschreckung der jeweils erwärmten Abschnitte kontinuierlich fortschreiten zu lassen, so dass eine kontinuierlich und gleichmäßig durchlaufende Härtezone erzeugt wird.

Die gegenläufige Bewegung der Induktoren wird fortgesetzt, bis die Induktoren eine Endposition erreicht haben, in der ihre weitere Bewegung durch den anderen in der Endposition jeweils nächst benachbarten Induktor behindert wird. Zwischen der Endposition dieser beiden Induktoren ist nun eine noch ungehärtete Endzone eingeschlossen, deren Erstreckung wiederum beispielsweise von dem durch die Induktoren eingenommenen Raum abhängig ist.

Die zwischen den in Endposition befindlichen Induktoren verbleibende Endzone wird nun auf Härtetemperatur erwärmt. Die Gefahr eines Wiederanlassens der an die Endzone angrenzenden, zuvor bereits gehärteten Bereiche des Werkstücks wird dabei erfindungsgemäß dadurch reduziert, dass die im Bereich der Endzone eng benachbart angeordneten Induktoren gemeinsam in Richtung der vorherigen Bewegung eines der Induktoren bewegt werden. Auf diese Weise wird nur einer der Induktoren über die Endzone geführt, während sich der andere, in diesem Betriebszustand unwirksame Induktor über den zuvor von ihm bereits erwärmten und bereits abgeschreckten Abschnitt des Werkstücks bewegt. Dementsprechend erfolgt bei dieser Ausgestaltung der Erfindung die Erwärmung der Endzone nur durch Wirkung des einen über sie bewegten Induktors. Dessen Bewegung und Energieeintrag wird dabei so gesteuert, dass es auch im Bereich des Übergangs zwischen der Endzone und des zuvor durch den anderen, nun vorzugsweise abgeschalteten Induktor gehärteten Werkstückabschnitts allenfalls zu minimalen Anlasserscheinungen kommt.

Erforderlichenfalls lassen sich die an die Endzone angrenzenden, bereits gehärteten Abschnitte durch eine geeignete Kühlung gegen ein Wiederanlassen schützen.

Grundsätzlich lässt sich das erfindungsgemäße Verfahren mit einer beliebigen geradzahligen Anzahl von Induktoren durchführen. Um diese Induktoren mit identischen Bewegungsgeschwindigkeiten entlang des Werkstücks bewegen zu können, werden sie zu Anfang der Bearbeitung paarweise so angeordnet, dass die zwischen jedem Induktorpaar eingeschlossenen Startzonen in identischen Abständen zueinander entlang des Werkstücks verteilt sind. Eine sowohl verfahrenstechnisch als auch apparativ günstige Möglichkeit der Durchführung des erfindungsgemäßen Verfahrens sieht in diesem Zusammenhang vor, dass genau zwei Induktoren eingesetzt werden. Gerade bei der Bearbeitung von kreisrunden ringförmigen oder vergleichbar geformten Werkstücken ermöglicht es die Verwendung von zwei Induktoren, die Erwärmung des Werkstücks so durchzuführen, dass es nur zu minimalen Werkstückverformungen in Folge der Erwärmung kommt.

Eine weitere, das Bearbeitungsergebnis zusätzlich verbessernde Ausgestaltung des erfindungsgemäßen Verfahrens ist dadurch gekennzeichnet, dass während der Bewegung der Induktoren, während des Erwärmens der jeweiligen Abschnitte des Werkstücks und/oder während des Abschreckens des zuvor erwärmten Abschnitts der Abstand des Induktors von dem Werkstück und/oder die Form des Werkstücks erfasst wird. Durch eine solche Abstandserfassung können die Verformungen des Werkstücks, die bei der Erwärmung und Abschreckung seiner jeweils bearbeiteten Abschnitte eintreten, jeweils erforderlichenfalls sowohl bei der Positionierung des jeweiligen Induktors zum Werkstück als auch bei der Regelung des vom Induktor jeweils eingebrachten Wärmeeintrags berücksichtigt werden.

Bei einer praxisgerechten Ausführung einer für die Durchführung des erfindungsgemäßen Verfahrens geeigneten Vorrichtung lässt sich dies dadurch bewerkstelligen, dass eine Messeinrichtung zum Erfassen des Abstands der Induktoren zum Werkstück und/oder zum Erfassen der Form des Werkstücks vorgesehen ist. Vorzugsweise gibt diese Messeinrichtung Messsignale an die Bewegungssteuereinrichtung ab, die dann die von ihr abgegebenen Steuersignale unter Berücksichtigung der Messsignale erzeugt. Ebenso kann die Messeinrichtung Messsignale an die Erwärmungssteuereinrichtung abgeben, die dann die von ihr abgegebenen Steuersignale unter Berücksichtigung der Messsignale erzeugt.

Eine besonders enge Anordnung der jeweils benachbarten Induktoren im Bereich der Start- und Endzonen lässt sich dadurch erreichen, dass der eine Induktor von der Innenseite und der andere Induktor von der Außenseite her an das Werkstück angesetzt werden.

Nachfolgend wird die Erfindung anhand einer ein Ausführungsbeispiel darstellenden Zeichnung näher erläutert. Es zeigen jeweils schematisch:

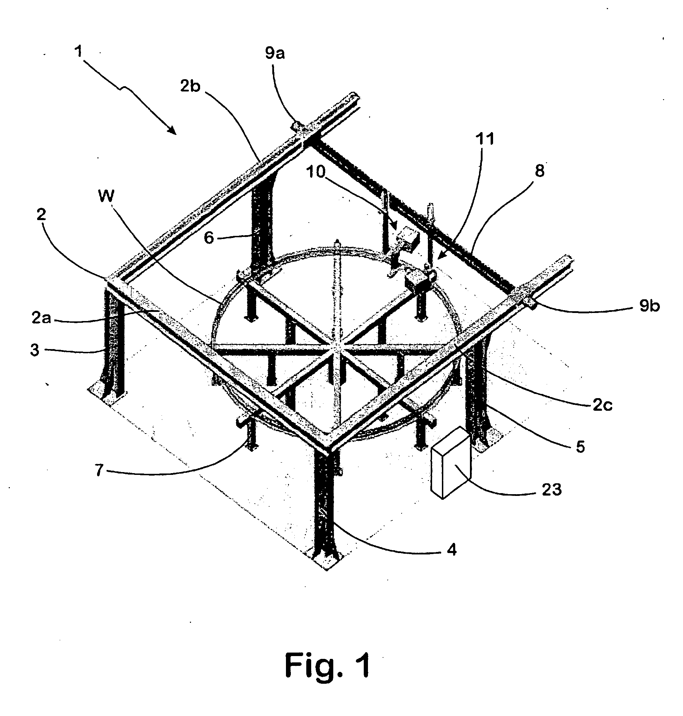

- Fig. 1: eine Vorrichtung zum Härten von Wälzlagerringen in einer perspektivischen Ansicht;

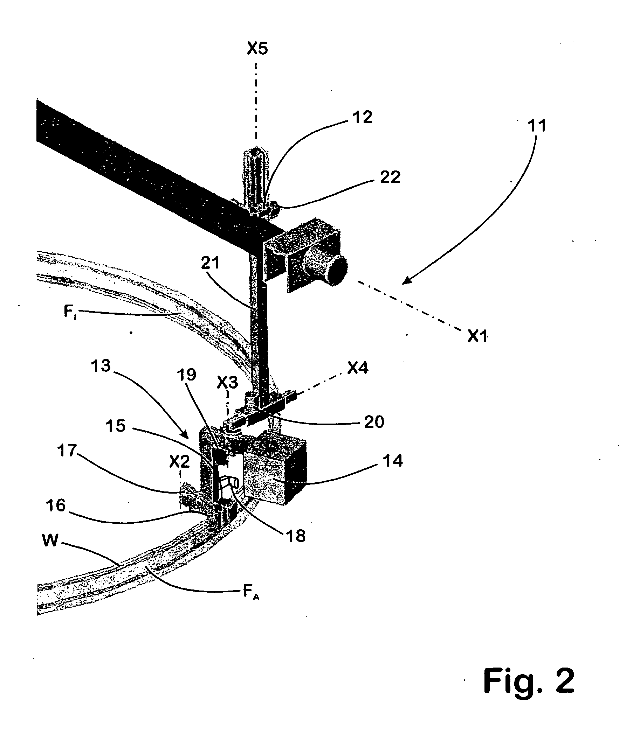

- Fig. 2: einen Ausschnitt der in Fig. 1 dargestellten Vorrichtung in seitlicher Ansicht;
- Fig. 3A - 3F: die in der in Fig. 1 dargestellte Vorrichtung eingesetzten Induktoren in verschiedenen Betriebsstellungen in einer Ansicht von oben.

Die Vorrichtung 1 wird zum Härten von aus Stahl gefertigten Werkstücken W eingesetzt, bei denen es sich beim hier beschriebenen Beispiel um große Wälzlagerringe mit einer Innenöffnung I handelt, deren Durchmesser 2000 mm bis 4000 mm beträgt.

Zu diesem Zweck weist die Vorrichtung 1 ein in Draufsicht U-förmiges Gestell 2 mit einer Basistraverse 2a auf, von deren Enden jeweils parallel verlaufende, die Schenkel des Gestells 2 bildende Längstraversen 2b,2c abgehen. Der Abstand und die Länge der Längstraversen 2b,2c sind größer als der Außendurchmesser des Werkstücks W. Gleichzeitig sind die Längstraversen 2b,2c sowohl hinsichtlich ihrer Länge als auch hinsichtlich ihres Abstands mittig zum Werkstück W ausgerichtet. Das Gestell 2 wird von vier Stützen 3,4,5,6 getragen, deren Höhe so groß ist, dass das Gestell 2 mit Abstand oberhalb des in horizontaler Ausrichtung flach auf einem Spanntisch 7 aufgespannten Werkstücks W angeordnet sind.

Die Längstraversen 2b,2c des Gestells 2 dienen als Führungen für eine Laufkatze 8, die sich quer zu den Längstraversen 2b,2c erstreckt und mit ihren Enden an ihnen geführt ist. Zum Verfahren der Laufkatze 8 entlang der Längstraversen 2b,2c sind Fahrantriebe 9a,9b vorgesehen, die mit jeweils einem Ende der Laufkatze 8 verbunden sind und sich an den Längstraversen 2b,2c abstützen.

Die Laufkatze 8 trägt zwei Härtungseinheiten 10,11. Jede der Härtungseinheiten 10,11 umfasst
- einen Stellantrieb 12 zum unabhängigen Verfahren der jeweiligen Härtungseinheit 10,11 entlang der durch die Laufkatze 8 gebildeten horizontal verlaufenden Stellachse X1;
- einen Induktor 13 mit einem Transformator 14 und einer von dem Transformator 14 gespeisten, von einem Winkelträger getragenen Heizschleife 15, über die das zum Erwärmen des Werkstücks W eingesetzte elektro-magnetische Feld induziert wird,
- als Abschreckeinrichtung eine Brauseneinheit 16 zum Ausbringen von Abschreckmedium auf das Werkstück W, wobei die Abschreckeinheit 16 von einem Arm getragen wird, der schwenkbar am Winkelträger der Heizschleife 15 befestigt ist,
- einen Schwenkantrieb 17 zum Verschwenken des die Abschreckeinheit 16 tragenden Arms um eine vertikal ausgerichtete Schwenkachse X2;
- eine Messeinrichtung 18 zum Erfassen des Abstands der Heizschleife 15 von der ihr jeweils zugeordneten Fläche des Werkstücks W;
- einen Schwenkantrieb 19 zum gemeinsamen Verschwenken des Induktors 13, der Abschreckeinheit 16 und der Messeinrichtung 18 um eine vertikal ausgerichtete Drehachse X3,
- einen Stellantrieb 20 zum gemeinsamen Verstellen des Induktors 13, der Abschreckeinheit 16 und der Messeinrichtung 18 um entlang einer horizontal ausgerichteten Stellachse X4,
- eine vertikal ausgerichtete Tragschiene 21, die an ihrem unteren Ende den Stellantrieb 20 mit dem Induktor 13, der Abschreckeinheit 16 und der Messeinrichtung 18 trägt, sowie
- einen mit dem ersten Stellantrieb 12 fest verbundenen Stellantrieb 22, der zum Verstellen der Tragschiene 21 mit den von ihr getragenen Bauteilen längs einer vertikal ausgerichteten Stellachse X5 dient. Dabei sind der Stellantrieb 12 und der Stellantrieb 22 mit der jeweiligen Tragschiene 21 der Härtungseinheit 10 auf der der Basistraverse 2a des Gestells 2 zugewandten Seite der Laufkatze 8 angeordnet, während der Stellantrieb 12, der Stellantrieb 22 und die Tragschiene 21 der Härtungseinheit 11 auf der gegenüberliegenden Seite der Laufkatze 8 positioniert sind.

Zum Steuern der von den einzelnen Bauelementen der Vorrichtung 1 ausgeführten Bewegungen und zur Regelung der Leistung der Induktoren 13 und der Abschreckeinheit 16 abgegebenen Leistungen ist eine Steuer- und Regeleinrichtung 23 vorgesehen, in der die Funktionen einer Bewegungs-, einer Erwärmungs- und einer Abschrecksteuereinrichtung miteinander kombiniert sind. Die Messeinrichtung 18 liefert die von ihr erfassten Messsignale an die Steuer- und Regeleinrichtung 23, die im Bearbeitungsbetrieb unter Berücksichtigung dieser Messsignale auf Grundlage eines vorgegebenen Bearbeitungsplanes Steuersignale an die Antriebe der Vorrichtung 1, die Induktoren 13 und die Abschreckeinheit 16 abgibt.

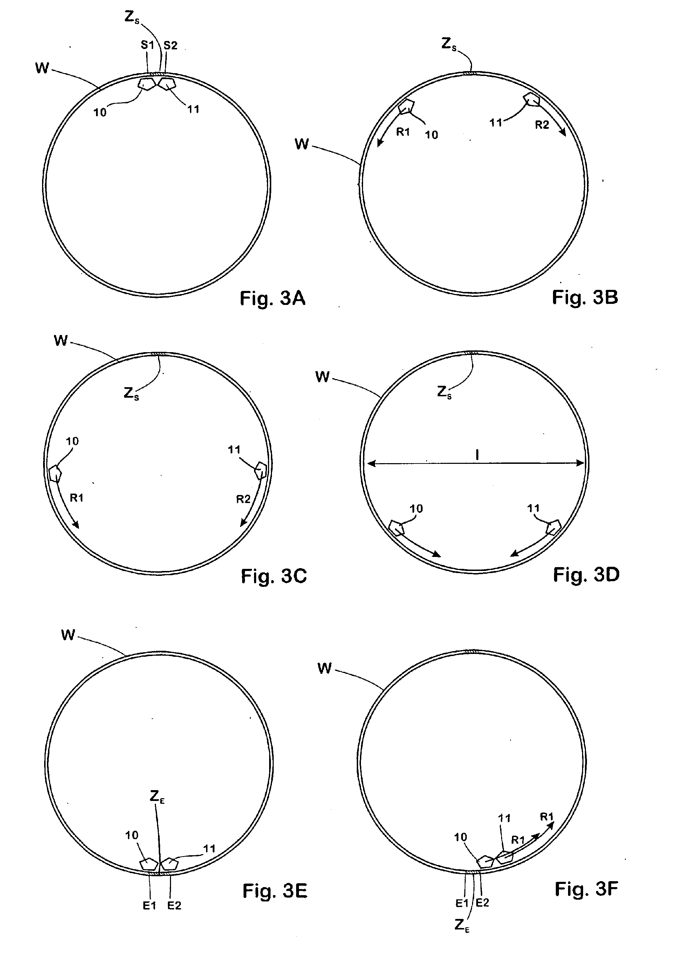

Zur Erläuterung der Funktionsweise der Vorrichtung 1 wird auf die Figuren 3A bis 3F Bezug genommen. Darin sind zur Verbesserung der Übersichtlichkeit jeweils nur das Werkstück W, die Startpositionen S1, S2 der Induktoren 13 der Härtungseinheiten 10,11 zu Beginn der Bearbeitung, eine Startzone Z_{S}, die Endpositionen E1,E2 der Induktoren der Härtungseinheiten 10,11 am Ende der Bearbeitung, eine Endzone Z_{E} sowie die Bewegungsrichtungen R1,R2 der Härtungseinrichtungen 10,11 und ihrer Induktoren 13 eingetragen.

Zum Härten des Werkstücks W auf seiner Innenumfangsfläche F_{I} wird der Induktor 13 der ersten Härtungseinheit 10 mit seiner Heizschleife 15 und seinem Transformator 14 gemeinsam mit der Abschreckeinheit 16 mittels des Drehantriebs 19 um die Drehachse X3 so verschwenkt, dass die Heizleiterschleife der Innenumfangsfläche F_{I} des Werkstücks W zugeordnet ist. In gleicher Weise wird der Induktor 13 der zweiten Härtungseinheit 11 mit seiner Heizschleife 15 und seinem Transformator 14 gemeinsam mit der Abschreckeinheit 16 mittels des Drehantriebs 19 um die Drehachse X3 so verschwenkt, dass auch die Heizleiterschleife 15 der zweiten Härtungseinheit 11 der Innenumfangsfläche F_{I} des Werkstücks W zugeordnet ist. Anschließend werden die Induktoren 13 der Härtungseinheiten 10,11 durch Verfahren der Laufkatze 8 längs der Längstraversen 2b,2c und Verfahren der Härtungseinheiten 10,11 längs der Laufkatze 8 selbst in ihre Startpositionen S1 und S2 bewegt, in der ihre Induktoren 13 eng benachbart zueinander am Werkstück W angeordnet sind. Zwischen den Startpositionen S1 und S2 ist nun die Startzone Z_{S} eingeschlossen, die nicht unmittelbar im Wirkbereich der Induktoren 13 der Härtungseinheiten 10,11 liegt. Diese Startzone Z_{S} wird nun auf Härtetemperatur erwärmt, indem die Induktoren 13 die ihnen jeweils unmittelbar zugeordneten Abschnitte des Werkstücks W durch Induktion eines elektro-magnetischen Feldes aufheizen, bis nach einer ausreichenden Erwärmungszeit auch in der Startzone Z_{S} in Folge des Wärmeflusses Härtetemperatur erreicht ist (Fig. 3A).

Sobald in der Startzone Z_{S} Härtetemperatur erreicht ist, werden die Härtungseinrichtungen 10,11 mit ihren Induktoren 13 in entgegengesetzten Bewegungsrichtungen R1,R2 entlang des Werkstücks W bewegt. Unmittelbar anschließend erfolgt das Abschrecken der Startzone Z_{S} mittels der Abschreckeinheiten 16 der Härtungseinheiten 10,11.

Während der ausgehend von den Startpositionen S1,S2 kontinuierlich mit gleichmäßiger Geschwindigkeit durchgeführten Bewegung der Härtungseinheiten 10,11 werden die in den Wirkbereich der Induktoren 13 der Härtungseinheiten 10,11 gelangenden Abschnitte des Werkstücks W auf Härtetemperatur erwärmt und unmittelbar anschließend von den Abschreckeinheiten 16 der Härtungseinheiten 10,11 abgeschreckt.

Während der Erwärmung und Abschreckung werden die sich in einer Veränderung der relativen Lage der Heizschleifen 15 der Härtungseinheiten 10,11 zum Werkstück niederschlagenden Verformungen des Werkstücks W von der jeweiligen Messeinrichtung 18 erfasst und an die Steuerund Regeleinrichtung 23 geliefert. Stellt die Steuer- und Regeleinrichtung 23 dabei fest, dass es zu einer unzulässig großen Abweichung des erfassten Abstands von einem Sollwert kommt, gibt sie Steuersignale an die jeweiligen Stellantriebe 12,20,22 bzw. die jeweiligen Schwenkantriebe 17,19 zum Nachstellen der Position des jeweiligen Induktors ab. Erforderlichenfalls zusätzlich oder alternativ gibt die Steuer- und Regeleinrichtung 23 Signale zur Anpassung der vom jeweiligen Induktor 13 abgegebenen Heizleistung bzw. der von der jeweiligen Abschreckeinheit 16 abgegebenen Kühlleistung ab (Figuren 3B - 3D).

Auf diese Weise wird das Werkstück W über seine Innenumfangsfläche Fᵣ in einem kontinuierlichen Arbeitsablauf gehärtet, bis die Härtungseinheiten 10,11 mit ihren Induktoren 13 eine Endposition E1,E2 erreicht haben. Zwischen den Endpositionen E1,E2 ist eine Endzone Z_{E} eingeschlossen, die bis zu diesem Zeitpunkt noch nicht gehärtet ist (Fig. 3E).

Mit Erreichen der Endpositionen E1,E2 wird die entgegengesetzte Bewegung der Härtungseinheiten 10,11 gestoppt und der Induktor 13 der Härtungseinheit 11 abgeschaltet. Anschließend werden die Härtungseinheiten 10,11 mit ihren Induktoren 13 gemeinsam in der Bewegungsrichtung R1 der Härtungseinheit 10 bewegt. Die Endzone Z_{E} wird dabei durch den Induktor 13 der Härtungseinheit 10 auf Härtetemperatur erwärmt und durch die Abschreckeinheit 16 der Härtungseinheit 10 abgeschreckt, während der Induktor 13 der Härtungseinheit 11 nach wie vor abgeschaltet bleibt. Demgegenüber wird die Abschreckeinheit 16 der Härtungseinheit 11 weiter in Betrieb gehalten, um ein Wiederanlassen des an die Endposition E2 angrenzenden, zuvor bereits gehärteten Abschnitts des Werkstücks W zu verhindern. Diese Bearbeitung der Endzone Z_{E} wird unter weiterhin gemeinsamer Bewegung der Härtungseinheiten 10,11 in Bewegungsrichtung R1 fortgesetzt bis auch die Endzone Z_{E} vollständig gehärtet ist (Fig. 3F).

### BEZUGSZEICHEN

- 1: Vorrichtung zum Härten von Werkstücken
- 2: Gestell
- 2a: Basistraverse des Gestells 2
- 2b, 2c: Längstraversen des Gestells 2
- 3, 4, 5, 6: Stützen
- 7: Spanntisch
- 8: Laufkatze
- 9a,9b: Fahrantriebe
- 10,11: Härtungseinheiten
- 12: Stellantrieb
- 13: Induktor
- 14: Transformator
- 15: Heizschleife
- 16: Abschreckeinheit
- 17: Schwenkantrieb
- 18: Messeinrichtung
- 19: Schwenkantrieb
- 20: Stellantrieb
- 21: Tragschiene
- 22: Stellantrieb
- 23: Steuer- und Regeleinrichtung

- W: Werkstück (Wälzlagerringe mit einer Innenöffnung I, deren Durchmesser 2000 mm bis 4000 mm beträgt)
- E1,E2: Endpositionen
- F_{A}: Außenumfangsfläche des Werkstücks
- F_{I}: Innenumfangsfläche des Werkstücks
- I: Innenöffnung des Werkstücks
- R1,R2: Bewegungsrichtungen
- S1, S2: Startpositionen
- X1: horizontale Stellachse
- X2: vertikale Schwenkachse
- X3: vertikale Drehachse
- X4: horizontale Stellachse
- X5: vertikale Stellachse
- Z_{E}: Endzone
- Z_{S}: Startzone

## Patentansprüche

1. Verfahren zum Härten eines einen geschlossenen Kurvenzug beschreibenden Werkstücks (W), wie einem Lager- oder Zahnring, bei dem folgende Arbeitsschritte durchlaufen werden:
- Ansetzen von mindestens zwei Induktoren (13) an das Werkstück (W) in einem Startbereich, in dem die Induktoren (13) zueinander eng benachbarte Startpositionen (S1,S2) einnehmen, die zwischen sich eine Startzone (Z_{S}) begrenzen;
- Erwärmen der Startzone (Z_{S}) mittels mindestens eines der Induktoren (13) auf Härtetemperatur und anschließendes Abschrecken der auf Härtetemperatur aufgeheizten Startzone (Z_{S});
- von der jeweiligen Startposition (S1,S2) ausgehendes Bewegen der Induktoren (13) entlang des Werkstücks (W), wobei die Bewegungsrichtung (R1,R2) des einen Induktors (13) entgegengesetzt zur Bewegungsrichtung (R1,R2) des anderen Induktors (13) gerichtet ist und die jeweils im Wirkbereich der Induktoren (13) befindlichen Abschnitte des Werkstücks (W) auf Härtetemperatur erwärmt und anschließend abgeschreckt werden; und
- Fortsetzen der entgegengesetzten Bewegung der Induktoren (13), bis die Induktoren (13) eine Endposition (E1,E2) erreicht haben, in der sie eng benachbart zu einem anderen Induktor (13) angeordnet sind, wobei zwischen den Endpositionen (E1,E2) dieser beiden Induktoren (13) eine Endzone (Z_{E}) eingeschlossen ist;
**dadurch gekennzeichnet, dass** zum Erwärmen der Endzone (Z_{E}) die der jeweiligen Endzone (Z_{E}) zugeordneten Induktoren (13)gemeinsam in Richtung (R1) einer der Bewegungsrichtungen (R1,R2) der Induktoren (13) unter Erwärmung der betreffenden Endzone (Z_{E}) auf Härtetemperatur mittels desjenigen Induktors (13) bewegt werden, in dessen Bewegungsrichtung (R1,R2) die gemeinsame Bewegung erfolgt.

2. Verfahren nach einem der voranstehenden Ansprüche, **dadurch gekennzeichnet, dass** der Induktor (13) abgeschaltet wird, entgegen dessen Bewegungsrichtung (R2) die gemeinsame Bewegung erfolgt.

3. Verfahren nach einem der voranstehenden Ansprüche, **dadurch gekennzeichnet, dass** genau zwei Induktoren (13) eingesetzt werden.

4. Verfahren nach einem der voranstehenden Ansprüche, **dadurch gekennzeichnet, dass** die von den Induktoren (13) bis zum Erreichen ihrer Endposition (E1,E2) jeweils zurückgelegten Wegstrecken gleich sind.

5. Verfahren nach einem der voranstehenden Ansprüche, **dadurch gekennzeichnet, dass** während der Bewegung der Induktoren (13), während des Erwärmens der jeweiligen Abschnitte des Werkstücks (W) und/oder während des Abschreckens des zuvor erwärmten Abschnitts der Abstand des Induktors (13) von dem Werkstück (W) und/oder die Form des Werkstücks (W) erfasst wird.

6. Verfahren nach Anspruch 5, **dadurch gekennzeichnet, dass** die Position des jeweiligen Induktors (13) zum Werkstück (W) abhängig von seinem erfassten Abstand und/oder abhängig von der erfassten Form des Werkstücks (W) verstellt wird.

7. Verfahren nach einem der voranstehenden Ansprüche, **dadurch gekennzeichnet, dass** die Induktoren (13) von der Innenseite her an das Werkstück (W) angesetzt werden.

8. Verfahren nach einem der voranstehenden Ansprüche, **dadurch gekennzeichnet, dass** das Bewegen der Induktoren (13) sowie das Erwärmen und Abschrecken der erwärmten Abschnitte des Werkstücks (W) bis zum Erreichen der Endpositionen (E1,E2) der Induktoren (13) in einem kontinuierlichen Arbeitsablauf durchgeführt werden.

## Claims

1. Method for hardening a workpiece (W) which describes a closed curve, such as a bearing or toothed ring, in which the following individual operations are performed:
- applying at least two inductors (13) to the workpiece (W) in a starting area, in which the inductors (13) adopt closely adjacent starting positions (S1, S2), which between them bound a starting zone (Z_{S});
- heating the starting zone (Z₈) by means of at least one of the inductors (13) to hardening temperature and then quenching the starting zone (Z_{S}) heated to hardening temperature;
- moving the inductors (13) from their respective starting position (S1, S2) along the workpiece (W), wherein the movement direction (R1, R2) of one inductor (13) is directed in opposition to the movement direction (R1, R2) of the other inductor (13) and the respective section of the workpiece (W) within the effective range the inductors (13) is heated to hardening temperature and then quenched; and
- continuing the opposed movement of the inductors (13), until the inductors (13) have reached an end position (E1, E2), in which they are arranged closely adjacent to another inductor (13), wherein between the end positions (E1, E2) these two inductors (13) bound an end zone (Z_{E});
**characterised in that**, in order to heat the end zone (Z_{E}) the inductors (13) associated with the respective end zone (Z_{E}) are moved together in the direction (R1) of one of the movement directions (R1, R2) of the inductors (13) with heating of the end zone (Z_{E}) concerned to hardening temperature by means of the inductor (13) in whose movement direction (R1, R2) the joint movement takes place.

2. Method according to one of the above claims, **characterised in that** the inductor (13), which is the one in opposition to whose movement direction (R2) the combined movement takes place, is switched off.

3. Method according to one of the above claims, **characterised in that** exactly two inductors (13) are used.

4. Method according to one of the above claims, **characterised in that** the distances travelled by the inductors (13) until they reach their end positions (E1, E2) are identical in each case.

5. Method according to one of the above claims, **characterised in that** during the movement of the inductors (13), during heating of the respective sections of the workpiece (W) and/or during the quenching of the previously heated section, the distance of the inductor (13) with respect to the workpiece (W) and/or the form of the workpiece (W) are captured.

6. Method according to claim 5, **characterised in that** the position of the respective inductor (13) in relation to the workpiece (W) is adjusted as a function of its captured distance and/or as a function of the captured form of the workpiece (W).

7. Method according to one of the above claims **characterised in that** the inductors (13) are applied from the inside to the workpiece (W).

8. Method according to one of the above claims **characterised in that** the movement of the inductors (13) and the heating and quenching of the heated sections of the workpiece (W) are carried out in a continuous process until the end positions (E1, E2) of the inductors (13) have been reached.

## Revendications

1. Procédé de durcissement d'une pièce qui décrit une courbe fermée (W), telle qu'une bague de roulement ou une couronne dentée, lequel procédé comprend les phases de travail suivantes :
- application d'au moins deux inducteurs (13) sur la pièce (W), dans un secteur de départ, dans lequel les inducteurs (13) prennent des positions de départ (S1, S2) qui, étroitement voisines l'une de l'autre, limitent entre elles une zone de départ (Z_{S});
- chauffage de la zone de départ (Z_{S}) à la température de durcissement, au moyen d'au moins l'un des inducteurs (13), et, ensuite, refroidissement rapide de la zone de départ (Z_{S}) chauffée à la température de durcissement;
- déplacement des inducteurs (13) à partir de la positions de départ (S1, S2) respective, le long de la pièce traitée (W), sachant que la direction de déplacement (R1, R2) de l'un des inducteurs (13) est opposée à la direction de déplacement (R1, R2) de l'autre inducteur (13) et les sections de la pièce traitée (W), respectivement situées dans la zone effective des inducteurs (13), étant chauffées à la température de durcissement et refroidies ensuite rapidement; et
- poursuite du déplacement opposé des inducteurs (13) jusqu'à ce que lesdits inducteurs (13) aient atteint une position finale (E1, E2), dans laquelle ils sont disposés à proximité étroite d'un autre inducteur (13), sachant qu'une zone finale (Z_{E}) est incluse entre les positions finales (E1, E2) de ces deux inducteurs (13), **caractérisé en ce que,** pour chauffer la zone finale (Z_{E}), les inducteurs (13), associés à la zone finale (Z_{E}) en question, sont déplacés en commun dans l'une (R1) des direction de déplacement (R1, R2) des inducteurs (13), ladite zone finale (Z_{E}) étant chauffée à la température de durcissement au moyen de l'inducteur (13) dans la direction de déplacement (R1, R2) duquel le mouvement commun est effectué.

2. Procédé selon l'une des revendications précédentes,
**caractérisé en ce que** l'inducteur (13), à l'opposé de la direction (R2) duquel le déplacement commun est effectué, est déconnecté.

3. Procédé selon l'une des revendications précédentes
**caractérisé en ce que** l'on utilise exactement deux inducteurs (13).

4. Procédé selon l'une des revendications précédentes,
**caractérisé en ce que** les trajets effectués par les inducteurs (13) jusqu'à ce que ceux-ci aient atteint leur position finale (E1, E2) sont égaux.

5. Procédé selon l'une des revendications précédentes,
**caractérisé en ce que**, pendant le déplacement des inducteurs (13), pendant le chauffage des sections respectives de la pièce traitée (W) et / ou pendant le refroidissement rapide des sections précédemment chauffées, l'intervalle entre l'inducteur (13) et la pièce traitée (W) et / ou la forme de la pièce traitée (W) sont saisis.

6. Procédé selon la revendication 5,
**caractérisé en ce que** la position de chaque inducteur (13) par rapport à la pièce traitée (W) est réglée en fonction de l'intervalle et / ou de la forme de la pièce traitée (W) détectés.

7. Procédé selon l'une des revendications précédentes
**caractérisé en ce que** les inducteurs (13) sont appliqués à partir de la face intérieure sur la pièce traitée (W).

8. Procédé selon l'une des revendications précédentes,
**caractérisé en ce que** le déplacement des inducteurs (13) ainsi que le chauffage et le refroidissement rapide des sections de la pièce traitée (W) chauffées sont effectués en continu jusqu'à ce que les positions finales (E1, E2) soient atteintes par les inducteurs (13).
